# EUROPEAN PATENT APPLICATION

(11) **EP 2 615 811 A1**
(43) Date of publication of application: **17.07.2013**
(21) Application number: 13159621.5
(22) Date of filing: 20.03.2006
(51) Int. Cl.: H04M 1/725, G06F 3/033, G06F 3/0488, G06F 3/023

(54) **Improved mobile communication terminal and method**

(30) Priority: 30.03.2005 US 94823
(62) Divisional of application: 06710570.0
(71) Applicant: Core Wireless Licensing S.à.r.l., 2310 Luxembourg (LU)
(72) Inventor: Wang, Kongqiao, 101117 Tong Zhou (CN); Yu, Kun, 100088 Haidan District (CN); Kangas, Jari A., FIN-33100 Tampere (FI)
(74) Representative: Swindell & Pearson Limited

(57) **Abstract**

During handwriting recognition input, when the user needs to input, e.g., a digit or a commonly used punctuation symbol (e.g. comma and period) into a text, she/he can simply make a single-click or a double-click on a corresponding "shortcut" sub-area on the touchpad under the existing input mode and the digit or punctuation symbol will be input (310). The "shortcuts" of the grid are advantageously arranged as the layout of the dial of telephones, which is easy to remember (310).

## Description

### Technical field

The present invention relates to a method and apparatus as well as a computer program for controlling a mobile communication terminal that is capable of handwriting recognition.

### Background

Mobile telephones have evolved during the last few years from being simple voice communication devices to present day intelligent communication terminals having processing and communication capabilities that were almost unimaginable not long ago. Needless to say, the use of a mobile telephone now involves such communication intensive activities as sending e-mail messages, browsing the World Wide Web as well as other activities such as managing calendar functions and playing games. A strong driving force during the development of present day communication devices has been that of user demand for miniaturization and reduced weight. This has, however, resulted in manufacturers of devices having been forced to compromise between physical size and usability in terms of providing an easy to use user interface. For example, a typical mobile telephone is equipped with a small keypad, often comprising no more than fifteen small keys that have multiple input functions.

A problem relating to present day communication devices is hence that of providing an easy way of inputting text into a communication device, e.g. text input when recording information in a calendar application or text input when composing an e-mail message or a Short Message Service (SMS) message.

Prior art methods and devices have approached this problem in a number of different ways. One example is that of utilizing a touch sensitive pad or a touch sensitive display on which a user enters text and other input information by writing with, e.g., a small stylus as if writing with a pen on paper. The movement of the stylus along a trace over the touch sensitive pad or display generates a trace signal that is digitized and analyzed by handwriting recognition procedures that typically are implemented by means of software instructions.

However, in some situations the recognition procedures may be unable to resolve a trace signal into a desired symbol. This may be due to a situation where there exist ambiguities regarding symbols or parts of symbols being very similar, or simply be due to inaccurate handwriting by the user. One example of such an ambiguity is the punctuation symbol "," (comma) and a carriage return.

Prior art solutions to this problem typically involve switching the device from an input mode where handwriting recognition is used into an input mode where, for example, a keyboard is used. One example of such prior art is the "Sony Ericsson P900 smartphone". The user switches to keyboard-mode by tapping on a keyboard symbol on the touch sensitive display. A keyboard is then displayed and the user may enter a desired symbol by tapping on the appropriate key.

A drawback of such a solution is that it is inefficient in terms of the time it takes to enter symbols. Particularly time consuming and complicated is the case where, as in the Sony Ericsson P900, a plurality of different keyboards are provided for the user to select among, e.g. one keyboard comprising mostly special characters and one keyboard comprising mostly numerical keys.

### Summary of the invention

An object of the present invention is hence to overcome the drawbacks with prior art devices.

This object is achieved by way of a method, a mobile communication terminal and a computer program according to the appended claims.

That is, in a first aspect, an inventive method of controlling a mobile communication terminal overcomes the drawbacks of prior art. The terminal comprises a control unit, a display and touch sensitive means configured to recognize handwriting via trace signals generated as a user writes within a hand writing recognition area on the touch sensitive means The method comprises, while sensing and analyzing a trace signal comprising a sequence of position detections, recognizing a tapping action, e.g. single clicking or double clicking, at a detected action position, selecting a specific symbol from a set of predetermined symbols, said selection being performed in dependence of the detected action position, and providing the selected symbol for use in said control of the mobile communication terminal.

Preferably, the symbols in the set of predetermined symbols are associated with respective sub-areas, e.g. arranged in rows and columns, within the writing recognition area and the selection is performed in dependence on within which sub-area the action position is.

The predetermined set of symbols may in preferred embodiments of the invention comprise the sequence of digits 0 to 9 and/or at least one punctuation symbol.

The control of the terminal may in preferred embodiments of the invention comprise a text editing operation.

That is, during handwriting recognition input, when the user needs to input, e.g., a digit or a commonly used punctuation symbol (e.g. comma and period) into a text, she/he can simply make a single-click or a double-click on a corresponding "shortcut" sub-area on the touchpad or touch sensitive display under the existing input mode and the digit or punctuation symbol will be input. This in contrast to prior art solutions where typically a switch of input mode is performed by clicking a mode switch button etc. The "shortcuts" of the grid are advantageously arranged as the layout of the dial keys of telephones, which is easy to remember.

The invention is advantageous when utilized in connection with handwriting recognition of, e.g., Chinese characters or any other similar character set comprising graphically complex characters consisting of a plurality of lines, curves and dots. Digits are then entered, during handwriting recognition of the complex characters, by double-clicking in the appropriate sub-area. Double-clicking is particularly suitable since such a tapping action is easily distinguishable from the handwriting action that is to be recognized as a dot, which may be part of a desired character being written.

In a second aspect, the invention provides a mobile communication terminal comprising a control unit, a display and touch sensitive means that are configured to recognize handwriting via trace signals generated as a user writes within a hand writing recognition area on the touch sensitive means. The terminal further comprises control means for sensing and analyzing a trace signal comprising a sequence of position detections, recognizing means for recognizing a tapping action at a detected action position, selection means for selecting a specific symbol from a set of predetermined symbols, said selection being performed in dependence of the detected action position, and provision means for providing the selected symbol for use in said control of the mobile communication terminal.

In preferred embodiments are the touch sensitive means arranged in combination with the display thereby constituting a touch sensitive display.

In other preferred embodiments are the touch sensitive means arranged separately with respect to the display thereby constituting a touch sensitive pad.

In a third aspect, the invention provides a computer program comprising software instructions that, when executed in a mobile communication terminal as described above in connection with the second aspect of the invention, controls the terminal as described above in connection with the first aspect of the invention.

An advantage of the present invention is that it increases the rate at which a user can enter symbols into a mobile communication terminal. Moreover, since the input of, e.g., digits and punctuation marks is made not by hand writing recognition, but rather by an equivalent of pressing a key on a keyboard, the accuracy is effectively total.

Because of the fact that the invention, in preferred embodiments, is implemented by means of software instructions in already existing mobile communication terminals, an advantage is that it provides an easy and inexpensive way of adding functionality.

### Brief description of the drawings

Figure 1 shows a schematically drawn block diagram of an embodiment of a mobile communication device according to the present invention.
Figure 2 illustrates a schematically drawn block diagram of an embodiment of a mobile communication device according to the present invention.
Figures 3a and 3b illustrate a device according to the present invention having a touch sensitive display.
Figure 4 illustrates a device according to the present invention having a touch sensitive pad.
Figure 5 is a flow chart illustrating an embodiment of a method according to the present invention.

### Detailed description of preferred embodiments

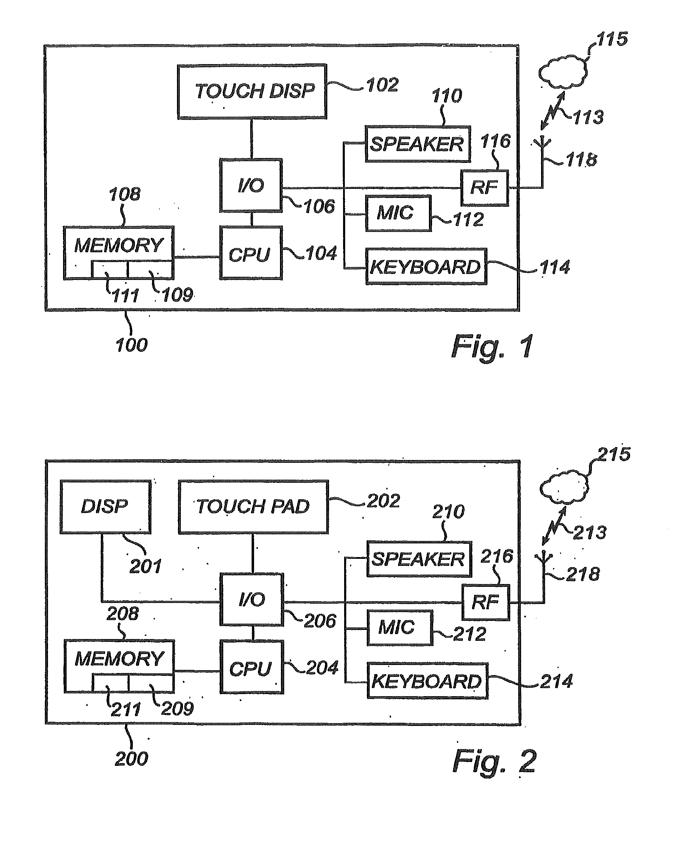

Figure 1 illustrates schematically a communication device in the form of a mobile telephone terminal 100 in which the present invention is implemented. The telephone 100 is capable of communication via an RF-unit 116 and an antenna 118 through an air interface 113 with a mobile (radio) communication system 115 such as the well known systems GSM/GPRS, UMTS, CDMA 2000 etc.

The terminal 100 comprises a processor 104, memory 108 as well as input/output units in the form of a speaker 110, a microphone 112, a keyboard 114 and a touch sensitive display 102 on which a user writes using, e.g., a stylus or similar device. The input/output units communicate with the processor 104 through an I/O-interface 106. The details regarding how these units communicate are known to the skilled person and is therefore not discussed further. The communication terminal 100 may, in addition to the illustrated mobile telephone terminal, a Personal Digital Assistant (PDA) equipped with radio communication means.

The method according to the preferred embodiments of the present invention will in general reside in the form of software instructions of a computer program 109 with an associated memory area 111, together with other software components necessary for the operation of the terminal 100, in the memory 108 of the terminal 100. The computer program 109 may be resident or it may be loaded into the memory 108 from a software provider, e.g. via the air interface 113 and the network 115, by way of methods known to the skilled person. The program 109 will be executed by the processor 104, which will receive and process input data from the different units in the terminal 100, particularly input data in the form of trace signals from the touch sensitive display 102, where the trace signals represent traces and other actions performed by the user using, e.g., a stylus to write on the touch sensitive display.

A second embodiment of a communication device according to the present invention is illustrated in figure 2. Similar to the device discussed above in connection with figure 1, a mobile telephone terminal 200 is capable of communication via an RF-unit 216 and an antenna 218 through an air interface 213 with a mobile (radio) communication system 215 such as the well known systems GSM/GPRS, UMTS, CDMA 2000 etc.

The terminal 200 comprises a processor 304, memory 308 as well as input/output units in the form of a speaker 310, a microphone 212 and a keyboard 214. In contrast to the example described above, the terminal 200 comprises a touch sensitive pad 202 on which a user writes using, e.g., a stylus or similar device. A display 203 is used to present information to the user. These input/output units communicate with the processor 204 through an I/O-interface 206.

As in the example discussed above, software instructions of a computer program 209, for performing the invention, with an associated memory area 211, together with other software components necessary for the operation of the terminal 200, reside in the memory 208 of the terminal 200. The computer program 209 may be resident or it may be loaded into the memory 208 from a software provider, e.g. via the air interface 213 and the network 215, by way of methods known to the skilled person. The program 209 will be executed by the processor 204, which will receive and process input data from the different units in the terminal 200, particularly input data in the form of trace signals from the touch sensitive pad 202.

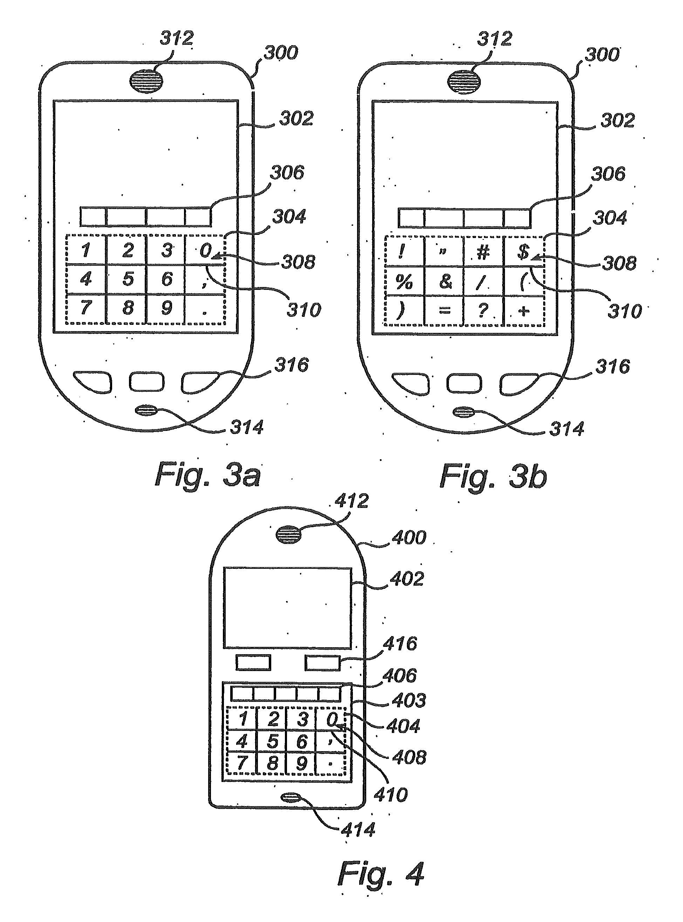

A method according to the present invention will now be described with reference to figures 3a, 3b, 4 and 5. The method will typically be realized by means of a computer program, e.g. the computer programs 109 and 209 discussed above in connection with figures 1 and 2. The computer program will utilize a part of memory, e.g. corresponding to the memory area 111 and 211 in figures 1 and 2, respectively.

With reference to figures 3a and 3b, a mobile communication terminal 300 comprises a touch sensitive display 302, a loudspeaker 312, a microphone 314 and a keypad having a plurality of control keys 316. As the skilled person will realize, the terminal 300 may be of the kind described above in connection with figure 1.

The touch sensitive display 302 is configured to sense hand writing, by means of a stylus or other suitable implement, within a hand writing recognition area 304 and configured to sense tapping actions within a function area 306, which is divided into four areas assigned to specific functions or symbols as shown in the figure. A grid 310 is displayed within the hand writing recognition area 304 and within sub-areas 308 defined by the grid 310 are symbols displayed. In figure 3a the symbols in the sub-areas 308 are the digits 0 to 9 as well as the common punctuation marks "," (comma) and "." (period).

Hand writing within the hand writing recognition area 304 will result in a sequence of detected positions being input to appropriate recognition procedures in the controlling hardware and software in the terminal. A detection of a tapping action within any of the sub-areas 308 of the grid 310 will result in a detection of a corresponding symbol, i.e. a symbol as displayed at the tapping action position. Tapping within the function area 306 will result in any appropriate action within the terminal, as the skilled person will realize, including a re-definition of the set of symbols associated with the sub-areas 308 of the grid 310. Such a situation is in fact illustrated in figure 3b, where the sub-areas 308 comprise a more extended set of punctuation symbols.

Figure 4 illustrates another embodiment of a mobile communication terminal 400 according to the invention. As for the terminal 300 described above, the terminal 400 comprises a loudspeaker 412, a microphone 414 and a keypad having a plurality of control keys 416. In contrast to the terminal 300 described above, a display 402 and a touch sensitive pad 403 are in the terminal 400 separate units and are spatially separated on the terminal 400 front. Nevertheless, the touch sensitive pad 403 is configured with a hand writing recognition area 404 to function in the same manner as the touch sensitive display 302 of the terminal 300 in figure 3, one difference being that a grid 410 and corresponding sub-areas 408 with their associated symbols remain fixed. Preferably, the grid 410 and the symbols within the sub-areas 408 are printed during manufacture, or in any suitable way marked on the pad 403. As the skilled person will realize, the terminal 400 may be of the kind described above in connection with figure 2.

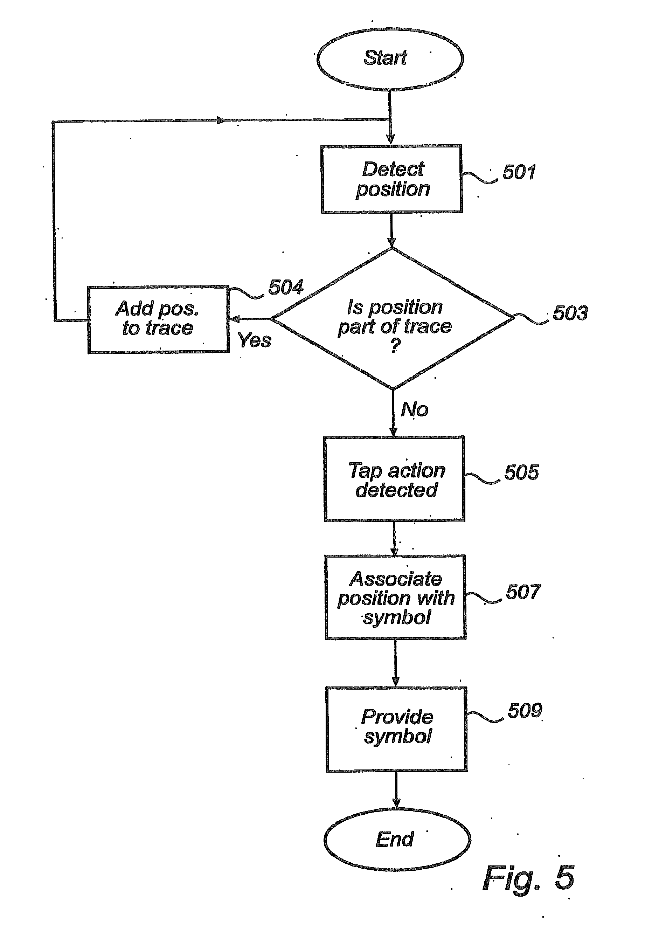

A method according to the invention will now be described with reference to a flow chart in figure 5. The method may be effectuated in control circuitry and software instructions in any of the embodiments of a terminal described above in connection with figures 1 to 4.

As the skilled person will realize, the method may form part of a more complex control system and as such takes place while sensing and analyzing a trace signal comprising a sequence of position detections when an implement such as a stylus is used by a user writing within a writing recognition area on a touch sensitive display or pad.

In a position detection step 501, a position (e.g. coordinates representing a position) of a writing implement is detected. The detected position is, in a checking step 503, analyzed to the extent that it is possible to determine whether or not the detected position forms part of a trace that is to be interpreted and analyzed in a hand writing recognition procedure. If it is determined that the detected position is part of a trace, the detected position is recorded in a recording step 504 and the method returns to the detection step 501. If it in the checking step 503 is determined that the detected position is not part of a trace, the detected position is interpreted as being a tapping action in an action determination step 505. The tapping action may, e.g., be determined when a "single-click" or a "double-click" is detected. In an association step 507, the detected position of the tapping action is then used in selecting a specific symbol from a set of predetermined symbols, where the selection is performed in dependence of the detected action position. For example, the action position is compared with a set of coordinates that define sub-areas (cf. figures 3 and 4) and associated symbols, yielding a match whereby the desired symbol is identified. The symbol is then provided, in a provision step 509, to the controlling procedure, for example a text editing operation.

According to an aspect of the disclosure, there is provided:
1. A method of controlling a mobile communication terminal, said terminal comprising a control unit, a display and touch sensitive means that are configured to recognize handwriting via trace signals generated as a user writes within a hand writing recognition area on the touch sensitive means, said method comprising, while sensing and analyzing a trace signal comprising a sequence of position detections:
   - recognizing a tapping action at a detected action position,
   - selecting a specific symbol from a set of predetermined symbols, said selection being performed in dependence of the detected action position, and
   - providing the selected symbol for use in said control of the mobile communication terminal.
2. The method of 1 above wherein the symbols in said set of predetermined symbols are associated with a respective sub-area within the writing recognition area and wherein the selection is performed in dependence on within which sub-area the action position is.
3. The method of 2 above wherein said sub-areas are arranged in rows and columns within the writing recognition area.
4. The method of any of 1 to 3 above wherein the tapping action is a single-click action.
5. The method of any of 1 to 3 above wherein the tapping action is a double-click action.
6. The method of any of 1 to 5 above wherein the predetermined set of symbols comprises the sequence of digits 0 to 9.
7. The method of any of 1 to 6 above wherein the predetermined set of symbols comprises at least one punctuation symbol.
8. The method of any of 1 to 7 above wherein the control of the terminal comprises a text editing operation.

According to another aspect of the disclosure, there is provided:
9. A mobile communication terminal comprising a control unit, a display and touch sensitive means that are configured to recognize handwriting via trace signals generated as a user writes within a hand writing recognition area on the touch sensitive means, said terminal comprising:
   - control means for sensing and analyzing a trace signal comprising a sequence of position detections,
   - recognizing means for recognizing a tapping action at a detected action position,
   - selection means for selecting a specific symbol from a set of predetermined symbols, said selection being performed in dependence of the detected action position, and
   - provision means for providing the selected symbol for use in said control of the mobile communication terminal.
10. The mobile communication terminal of 9 above wherein the touch sensitive means are arranged in combination with the display thereby constituting a touch sensitive display.
11. The mobile communication terminal of 9 above wherein the touch sensitive means are arranged separately with respect to the display thereby constituting a touch sensitive pad.

According to a yet further aspect of the disclosure, there is provided:
12. A computer program comprising software instructions that, when executed in a mobile communication terminal comprising a control unit, a display and touch sensitive means that are configured to recognize handwriting via trace signals generated as a user writes within a hand writing recognition area on the touch sensitive means, controls the terminal while sensing and analyzing a trace signal comprising a sequence of position detections by recognizing a tapping action at a detected action position, selecting a specific symbol from a set of predetermined symbols, said selection being performed in dependence of the detected action position, and providing the selected symbol for use in said control of the mobile communication terminal.

The invention is defined in the following claims.

## Claims

1. A method comprising:
programmably displaying a first symbol set within a hand writing recognition area (304) of a display (302), wherein the first symbol set is displayed as a plurality of sub-areas (308) each having a corresponding symbol;
receiving an input from the hand writing recognition area;
detecting a position of the input;
determining if the input is part of a character input or a symbol selection input; and
in response to a symbol selection input, determining the symbol corresponding with the sub-area associated with the detected position input.

2. The method of claim 1, further comprising programmably displaying the first symbol set entirely within the hand writing recognition area (304).

3. The method of any of claims 1 to 2, further comprising:
receiving an input in a function area (306) of the display (302) apart from the hand writing recognition area (304);
defining a second symbol set of predetermined symbols; and
programmably displaying the second symbol set in place of the first symbol set.

4. The method of any of claims 1 to 3, further comprising providing the determined symbol to a text editing operation.

5. The method of any of claims 1 to 4, further comprising determining the symbol corresponding with the sub-area (308) associated with the detected position input whilst remaining in a handwriting recognition mode.

6. An apparatus (100) comprising means (104, 108, 102) configured to cause the apparatus at least to perform the method as claimed in any one of claims 1 to 5.

7. A computer program (109), that when executed on a computer (100), causes the computer at least to perform the method of any one of claims 1 to 5.
